# EUROPÄISCHE PATENTANMELDUNG

(11) **EP 3 957 946 A1**
(43) Veröffentlichungstag der Anmeldung: **23.02.2022**
(21) Anmeldenummer: 20192080.8
(22) Anmeldetag: 21.08.2020
(51) Int. Cl.: G01B 3/102

(54) **BANDMASS ODER TASCHENBANDMASS MIT FREILAUF**

(71) Anmelder: Bayerische Mass-Industrie Arno Keller GmbH, 91217 Hersbruck (DE)
(72) Erfinder: Hubert, Ralf, 90765 Fürth (DE)
(74) Vertreter: Götz, Gudrun Veronika

(57) **Zusammenfassung**

Die Erfindung betrifft ein Bandmaß (100) oder Taschenbandmaß (200), aufweisend ein Gehäuse (210) oder einen Rahmen (110), ein im Innern des Gehäuses (210) oder innerhalb des Rahmens (110) angeordnetes Messband (101, 201) und... eine gegenüber dem Gehäuse (210) oder dem Rahmen (110) rotierbar gelagerte Messbandtrommel (130), die zum Aufwickeln des Messbandes (101, 201) entlang dessen Einziehrichtung (E) in einer ersten Rotationsrichtung (R1) und zum Abwickeln des Messbandes (101, 201) entlang dessen Ausziehrichtung (A) in einer zweiten Rotationsrichtung (R2) um eine Zentralachse (Z) rotierbar ist. Dabei ist das Messband (101, 201) und/oder die Messbandtrommel (130) mit einem Mittel zur Rotationsdämpfung (160) gekoppelt ist, wobei das Messband (101, 201) und/oder die Messbandtrommel (130) in einer ersten Richtung (E oder A) des Messbands (101, 201) und/oder einer ersten Richtung (R1 oder R2) der Messbandtrommel (130) wenigstens zeitweise freiläuft und in einer, der ersten Richtung jeweils entgegengesetzten, zweiten Richtung (A bzw. E) des Messbands (101, 201) und/oder zweiten Richtung (R1 bzw. R2) der Messbandtrommel (130), wenigstens zeitweise durch das Mittel zur Rotationsdämpfung (160) gedämpft..

## Beschreibung

Die Erfindung betrifft ein Bandmaß oder Taschenbandmaß, aufweisend ein Gehäuse oder einen Rahmen, ein im Innern des Gehäuses oder innerhalb des Rahmens angeordnetes Messband und eine gegenüber dem Gehäuse oder dem Rahmen rotierbar gelagerte Messbandtrommel, die zum Aufwickeln des Messbandes entlang dessen Einziehrichtung in einer ersten Rotationsrichtung und zum Abwickeln des Messbandes entlang dessen Ausziehrichtung in einer zweiten Rotationsrichtung um eine Zentralachse rotierbar gelagert ist.

Bandmaße mit Messbändern dienen im Vermessungswesen allgemein der Ermittlung von Distanzen bis 100 Metern mit Millimeter- oder Zentimetergenauigkeit. Das Messband wird am Boden aufgelegt oder zwischen den Messpunkten gespannt. Zur verbesserten Handhabung und zum Transport sind Messbänder in einem Bandmaß auf einer Messbandtrommel zu einer Messbandwicklung aufgerollt oder aufgewickelt und die Messbandwicklung ist in einem Gehäuse und/oder einem Rahmen gelagert. Für eine Vermessung wird das Messband in einer Bandausziehrichtung unter Rotation der Messbandtrommel um eine Trommelrotationsachse oder Zentralachse in einer zweiten Rotationsrichtung bis zu einer benötigten Länge abgewickelt. Nach der Vermessung wird das Messband wieder in einer Bandeinziehrichtung unter Rotation der Messbandtrommel in einer ersten, der ersten Rotationsrichtung entgegengesetzten, Rotationsrichtung vollständig aufgewickelt.

Bandmaße mit vorzugsweise gewölbten Messbändern mit Längen bis vorzugsweise 10 Metern, die in einem kompakten bzw. geschlossenen Gehäuse untergebracht sind, werden als Taschenbandmaße bezeichnet. Während des Abwickelns des Messbandes wird meist ein Federeinzugsmechanismus gespannt, wobei beim darauffolgenden Entspannen des Federeinzugsmechanismus ein automatisches Aufwickeln des Messbandes realisiert ist.

Bandmaße mit Messbändern mit Längen bis vorzugsweise 100 Metern, die in einem offenen Rahmen untergebracht sind, werden als lange Bandmaße bezeichnet. Das Messband eines langen Bandmaßes kann an einem Ende ein Spanngewicht oder Lot aufweisen, um bspw. den Flüssigkeitsfüllstand in einem Behälter zu messen.

Auch wenn für eine bequeme Handhabung ein Abwickeln und Aufwickeln des Messbandes schnell und ohne Kraftaufwand wünschenswert erscheint, können in Taschenbandmaßen und langen Bandmaßen Mittel zur Dämpfung der Rotationsbewegung der Messbandtrommel eingesetzt. Diese Mittel zur Rotationsdämpfung verhindern eine unkontrolliert schnelle Bewegung des Messbandes beim Aufwickeln und/oder Abwickeln, was sonst zu einer Verletzungsgefahr am scharfkantigen Messband führen würde oder eine gleichmäßige Messbandwicklung beeinträchtigt. Auch soll insbesondere bei langen Bandmaßen ein Nachlauf verhindert werden. Ein Nachlauf liegt vor, wenn das Messband auf der gewünschten Länge gestoppt werden soll, die Messbandtrommel jedoch aufgrund ihrer Trägheit weiter rotiert. Da gleichzeitig kein weiteres Messband mehr aus dem Rahmen ausgezogen wird, fächert die Messbandwicklung, auch infolge der Eigenspannung des Messbands weiter auf. So ist bspw. aus der WO 2009 048 284 A2 ein Taschenbandmaß mit einem massiven Reibstück aus Silikon als Mittel zur Rotationsdämpfung bekannt, welches an der Oberfläche des Messbandes eine Reibung erzeugt und dadurch die Geschwindigkeit des Messbandes und somit mittelbar auch die Rotationsgeschwindigkeit der Messbandtrommel, reduziert.

Aus der DE 1 815 201 U ist ferner ein Mittel zur Rotationsdämpfung mit einer Tellerfeder realisiert. Die Tellerfeder ist auf der Rotationsachse der Messbandtrommel unter Vorspannung montiert, wobei durch die Vorspannung ein konstanter Reibschluss, bspw. zwischen der Tellerfeder und der Messbandtrommel oder zwischen der Messbandtrommel und dem Gehäuse erzeugt wird. Es findet eine konstante Dämpfung der Rotation der Messbandtrommel statt, unabhängig davon, ob das Messband eingezogen oder ausgezogen wird.

Eine ähnliche Lösung ist aus der KR 10 0 855 614 B1 bekannt. Diese betrifft ein Taschenbandmaß, bei dem während des Aufwickelns und Abwickelns, rotationsstarr mit der Messbandtrommel verbunden und an deren äußeren Umfang angeordnet, ein Zahnkranz als erstes Getriebeelement um die Rotationsachse der Messbandtrommel rotiert. Das erste und ein zweites Getriebeelement sind miteinander gekoppelt, wobei die Rotationsbewegung des ersten Getriebeelements über ein Zwischengetriebeelement auf das zweite Getriebeelement übertragen wird. Über das Zwischengetriebeelement wird die am radial äußeren Umfang der Messbandtrommel, an welchem das erste Getriebeelement angeordnet ist, vergleichsweise langsame Rotationsgeschwindigkeit bei Übertragung auf das zweite Getriebeelement, welches um eine eigene Rotationsdämpferwelle rotiert, in eine schnellere Rotationsgeschwindigkeit übersetzt. An der Rotationsdämpferwelle sind Reibelemente angeordnet, die entlang einer Innenmantelfläche, unabhängig von der Rotationsrichtung der Messbandtrommel, eines sich verjüngenden bzw. konischen Dämpfergehäuses reiben. Die axiale Position der Reibelemente in dem Dämpfergehäuse ist über ein Bedienelement an der Außenseite des Taschenbandmaßgehäuses manuell einstellbar, sodass die Reibfläche zwischen den Reibelementen und dem Dämpfergehäuse, und damit die Dämpfungswirkung des Rotationsdämpfers, vergrößert oder verkleinert werden kann. Um ausreichend Bauraum zur Unterbringung des Zwischengetriebeelements sowie des Rotationsdämpfers zur Verfügung zu haben, ist der Rotationsdämpfer ferner im Bereich des Bandeinzugs und ortsfest bezüglich der Zentralachse angeordnet, wodurch er Verschmutzungen stärker ausgesetzt ist, was die Lebensdauer beeinträchtigen kann.

Die im Stand der Technik gezeigten Vorrichtungen zur Dämpfung eines Messbandes bringen ferner den Nachteil mit sich, dass die Dämpfungswirkung sowohl beim Aufwickeln als auch beim Abwickeln des Messbandes eintritt. Wird bspw. das durch das Gewicht des Lots hervorgerufene schnelle Abwickeln des Messbandes eines langen Bandmaßes gedämpft, so muss die Dämpfungswirkung beim Aufwickeln des Messbands durch den Benutzer mühsam überwunden werden. Insgesamt werden die Verwendungsmöglichkeiten eines Mittels zur Rotationsdämpfung, insbesondere eines Rotationsdämpfers, durch die Dämpfungswirkung in beiden Richtungen erheblich eingeschränkt.

Auch aus anderen technischen Bereichen sind sogenannte Rotationsdämpfer bekannt. Rotationsdämpfer werden in Möbeln oder in Automobilen eingesetzt, wobei die Bewegung von Schranktüren, Schubladen, Handschuhfächern oder Aschenbechern beim Öffnen und/oder Schließen gedämpft wird. Solche Rotationsdämpfer weisen eine Rotationsdämpferwelle auf, wobei die Rotationsdämpferwelle selbst durch die zu dämpfende Bewegung rotiert wird. Auf der Rotationsdämpferwelle sind Reibelemente angeordnet, die zur Dämpfung entlang einer Reiboberfläche oder in einer Flüssigkeit rotieren.

Beispielhafte Rotationsdämpfer mit einem dämpfenden Drehmoment zwischen 0,15 und 1,75 Newtonzentimetern werden bspw. von der pb elektro vertriebs-GmbH (https://www.pb-fastener.de/produkt/mit-freilauf-schraubbar-k151011, aufgerufen am 12.08.2020) vertrieben. Die Rotationsdämpfer weisen ein Stirnzahnrad und einen Freilauf auf. Ferner ist eine Einbauanleitung für eine Anordnung des Rotationsdämpfers gegenüber einem weiteren Stirnzahnrad für ein gedämpftes Getriebe mit Dämpfungswirkung in einer ersten Rotationsrichtung und freilaufend, d.h. ohne Dämpfung, in einer zweiten Rotationsrichtung beschrieben.

Es ist die Aufgabe der vorliegenden Erfindung, die Nachteile aus dem Stand der Technik zu eliminieren und die Handhabung von Bandmaßen und Taschenbandmaßen zu verbessern, insbesondere deren Handhabung sicherer und bequemer, mit einer verbesserten Haltbarkeit und folglich einer längeren Lebensdauer zu gestalten.

Die Aufgabe wird durch ein Bandmaß oder Taschenbandmaß gemäß Anspruch 1 gelöst.

Eine erfindungsgemäße Vorrichtung der eingangs beschriebenen Art kennzeichnet sich dadurch, dass das Messband und/oder die Messbandtrommel mit einem Mittel zur Rotationsdämpfung gekoppelt ist, wobei das Messband und/oder die Messbandtrommel in einer ersten Richtung des Messbands und/oder einer ersten Richtung der Messbandtrommel wenigstens zeitweise freiläuft und in einer, der ersten Richtung jeweils entgegengesetzten, zweiten Richtung des Messbands und/oder zweiten Richtung der Messbandtrommel, wenigstens zeitweise durch das Mittel zur Rotationsdämpfung gedämpft ist.

Das Mittel zur Rotationsdämpfung kann jedes dämpfende Element sein, also ein Reibstück, eine Tellerfeder oder ein selbst rotierender Rotationsdämpfer. Dadurch ist ein langes Bandmaß realisierbar, bei dem das Mittel zur Rotationsdämpfung beim Abwickeln des Messbandes dämpft. Damit wird beim Abwickeln des Messbandes ein Nachlauf des Messbands und ein ungebremster Aufprall eines Spanngewichts verhindert. Beim Aufwickeln des Messbandes durch Betätigen einer Kurbeleinrichtung läuft das Messband und/oder die Messbandtrommel frei, das Aufwickeln des Messbandes ist also mit wenig Kraftaufwand und ohne den Dämpfungswiderstand möglich. Ferner ist ein Taschenbandmaß realisierbar, bei dem das Abwickeln des Messbandes ungedämpft, also mit Freilauf erfolgt, sodass beim Ausziehen nur die Federkraft der Einzugsfeder überwunden werden muss. Beim Einziehen des Messbandes dämpft das Mittel zur Rotationsdämpfung die Geschwindigkeit des Messbandes wenigstens zeitweise. Zeitweise kann heißen, dass ein, bspw. auf 8 Metern, ausgezogenes Messband beim Einziehen auf einem ersten Abschnitt, bspw. auf den ersten 7,5 Metern, ungedämpft eingezogen und lediglich auf dem letzten Abschnitt, also den letzten 0,5 Metern, gedämpft wird.

Vorteilhafte Ausführungsformen sind in den Unteransprüchen beansprucht und werden nachfolgend näher erläutert.

In einer bevorzugten Ausführungsform der Erfindung ist das Mittel zur Rotationsdämpfung ein Rotationsdämpfer und die Messbandtrommel mit einem dem Rotationsdämpfer eine Rotation übertragend verbunden, wobei der Rotationsdämpfer in einer ersten Rotationsrichtung des Rotationsdämpfers freiläuft und in einer zweiten, der ersten Richtung entgegengesetzten, Rotationsrichtung des Rotationsdämpfers, wenigstens zeitweise gedämpft läuft.

Das heißt, der Freilauf des Messbandes und/oder der Messbandtrommel ist realisiert, indem beim Ausziehen oder Einziehen des Messbandes ein Rotationsdämpfer freiläuft. Rotationsdämpfer sind als Mittel zur Rotationsdämpfung gegenüber massiven Reibstücken oder Tellerfedern deutlich langlebiger ausgebildet.

In einer optionalen Ausführung der erfindungsgemäßen Bandmaße oder Taschenbandmaße wird das Messband des Bandmaßes oder Taschenbandmaßes mittels des Rotationsdämpfers wahl- und/oder bedarfsweise entweder beim Abwickeln in der Ausziehrichtung wenigstens zeitweise gedämpft und läuft beim Aufwickeln in der Einziehrichtung frei oder wird beim Aufwickeln in der Einziehrichtung wenigstens zeitweise gedämpft und läuft beim Abwickeln in der Ausziehrichtung frei.

Das heißt, bei einem langen Bandmaß wird die Rotation der Messbandtrommel in der zweiten Rotationsrichtung der Messbandtrommel durch den Rotationsdämpfer gedämpft und die Rotation in der ersten Rotationseinrichtung der Messbandtrommel ist ungedämpft und/oder mit einem Freilauf realisiert. Bei einem Taschenbandmaß ist die Rotation der Messbandtrommel in der ersten Rotationsrichtung durch den Rotationsdämpfer wenigstens zeitweise, bspw. zu Beginn oder zum Ende des Einziehens, gedämpft und die Rotation der Messbandtrommel in der zweiten Rotationsrichtung der Messbandtrommel ungedämpft und/oder mit einem Freilauf realisiert.

In einer bevorzugten Ausführungsform weist der Rotationsdämpfer einen Behälter auf, der mit einem zähflüssigen oder hochviskosen Dämpfungsfluid, insbesondere mit einer Silikonflüssigkeit, gefüllt ist, wobei innerhalb des Dämpfungsfluids einer oder mehrere Flügel oder sonstige Widerstandselemente zur Ausbildung eines Strömungswiderstands rotieren.

In anderen Worten, der Behälter des Rotationsdämpfers ist als Widerstandsbehälter oder Fluidbehälter mit einem zähflüssigen oder hochviskosen Dämpfungsfluid, bspw. Silikon, ausgebildet. Zähviskos oder hochviskos heißt eine dynamische Viskosität von 0,1 Pascalsekunden oder 1 Pascalsekunde oder 10 Pascalsekunden. Grundsätzlich kann eine Dämpfung somit zunächst in beiden Rotationsrichtungen des Rotationsdämpfers erfolgen. Während des Freilaufs rotieren Widerstandselemente bzw. Flügel und Behälter gemeinsam, also freilaufend, sodass keine Dämpfung durch eine Relativbewegung der Widerstandselemente bzw. Flügel in dem Dämpfungsfluid stattfindet.

Vorzugsweise ist der Rotationsdämpfer aus einer Freilaufstellung in eine Dämpfungsstellung überführbar, wobei der Wechsel in einer Wechselrichtung von der Freilaufstellung in die Dämpfungsstellung durch die Bewegung des Messbandes entweder entlang der Ausziehrichtung oder entlang der Einziehrichtung bewirkt ist.

Dadurch entfällt eine manuelle Aktivierung des Freilaufs und/oder der Dämpfung. Die Bewegung des Messbandes selbst bewirkt die Aktivierung der Dämpfung und/oder des Freilaufs. Der Wechsel der Freilaufstellung in die Dämpfungsstellung erfolgt durch die Verschiebung einer Rotationsdämpferwelle des Rotationsdämpfers über eine Distanz von bspw. einem Millimeter entlang einer Wechselrichtung. Durch die Bewegungsrichtung des Messbandes wird auch die Rotationsdämpferwelle verschoben, sodass ein am Dämpfungsfluidbehälter rotationsstarr montiertes und mit der Rotationsdämpferwelle reibschlüssig gekoppeltes Freilaufzahnrad in der Freilaufstellung gemeinsam rotieren. In der Dämpfungsstellung gelangt das Freilaufzahnrad in Eingriff mit einer Zahnstange. Während der Dämpfungsfluidbehälter mit dem Freilaufzahnrad rotationsstarr verbunden bleibt, wird infolge der Rotation der Messtrommel der Reibschluss zwischen den Widerstandselementen und dem Dämpfungsfluidbehälter überwunden, sodass die Rotationsdämpferwelle im Dämpfungsfluid rotiert und so die Bewegung der Messbandtrommel dämpft.

In einer bevorzugten Weiterbildung der Erfindung ist ein Getriebe in der Art eines Planetengetriebes mit einem der Zentralachse zugeordneten ersten Getriebeelement und einem dem Rotationsdämpfer zugeordneten zweiten Getriebeelement ausgebildet, wobei der Rotationsdämpfer über das Getriebe eine Rotation übertragend mit der Messbandtrommel gekoppelt ist.

Durch Verwendung eines Getriebes kann mit Variation des Übersetzungsverhältnisses für verschiedene Bandmaß- und Taschenbandmaßmodelle eine unterschiedlich starke Dämpfung realisiert werden.

In einer ersten Variante des Getriebes ist das erste Getriebeelement des Getriebes beim Aufwickeln und/oder Abwickeln des Messbands relativ zu dem Gehäuse oder zu dem Rahmen, um die Zentralachse rotierend, ausgebildet oder gelagert, während das zweite Getriebeelement ortsfest an dem Gehäuse und/oder an dem Rahmen montiert ist.

In anderen Worten, der Rotationsdämpfer ist ortsfest an einem Rahmenelement bzw. Rahmenseitenteil oder einem Gehäuseelement befestigt. Das Sonnenrad rotiert mit der Messbandtrommel oder ist auf einem Deckel oder sonstigen Bauteil angeordnet, welches rotationsstarr mit der Messbandtrommel verbunden ist. Die Kombination aus einem mit der Messbandtrommel rotationsstarr verbundenen Sonnenrad als erstem Getriebeelement und einem ortsfest am Gehäuse oder Rahmen montierten Planetenrad als zweitem Getriebeelement ermöglicht eine besonders platzsparende Ausbildung eines Getriebes, insbesondere radial im Inneren der Messbandtrommel, welches besonders für Taschenbandmaße geeignet ist.

In einer zweiten, gegenüber möglichen Verschmutzung besonders vorteilhaften Variante ist das als ein Planetenrad ausgebildete zweite Getriebeelement, beim Aufwickeln und/oder Abwickeln des Messbands relativ zu dem Gehäuse oder zu dem Rahmen, die Zentralachse umlaufend, ausgebildet, während das erste Getriebeelement ortsfest an dem Gehäuse und/oder an dem Rahmen montiert ist.

Der Rotationsdämpfer ist also vorzugsweise nicht starr am Rahmen oder Gehäuse angeordnet, sondern bewegt sich bei Gebrauch. Dadurch wird verhindert, dass sich kontinuierlich Verunreinigungen am Rotationsdämpfer anlagern und so schrittweise dessen Funktionsfähigkeit beeinträchtigen. Dadurch werden die mit dieser Anordnung realisierten Bandmaße bzw. Taschenbandmaße wartungsärmer und langlebiger. Dies ist insbesondere für lange Bandmaße vorteilhaft, bei denen das Messband zur Messung von Füllständen in Flüssigkeiten eintauchen muss oder aber bei der Längenmessung im Freien, wobei das Messband mit Sand oder Schmutzpartikeln in Berührung kommt.

Vorzugsweise ist die Messbandtrommel innerhalb oder relativ zu einer, insbesondere einstückig angefügten, flanschartigen Ausnehmung des Gehäuses oder des Rahmens rotierbar gelagert, wobei die flanschartige Ausnehmung durch das erste Getriebeelement, insbesondere Sonnenrad, des Getriebes begrenzt ist.

Bei dieser Erfindungsvariante kann der Rotationsdämpfer selbst, als besonders verschmutzungsempfindliches Bauteil radial im Inneren der Messbandtrommel angeordnet sein und so durch die Mantelfläche der Messbandtrommel vor Verschmutzungen geschützt werden. Gleichzeitig entfällt das Erfordernis, ein aus dem Stand der Technik bekanntes Zwischenzahnrad zur Einstellung eines Übersetzungsverhältnisses, zwischen dem ersten Getriebeelement und dem zweiten Getriebeelement einzusetzen. Indem das erste Getriebeelement die flanschartige Ausnehmung des Gehäuses begrenzend ausgestaltet ist, kann dessen Durchmesser kleiner ausgeführt werden, wodurch das erste Getriebeelement gegenüber der aus dem Stand der Technik bekannten Lösung mit einer am Außenumfang vergleichsweise höheren Geschwindigkeit rotiert. Der Rotationsdämpfer ist als bewegliches und/oder bewegbares zweites Getriebeelement des Getriebes ausgebildet, während das der Zentralachse zugeordnete erste Getriebeelement ortsfest mit dem Rahmen oder Gehäuse ausgebildet ist. Dadurch ist das bewegliche zweite Getriebeelement sowohl mit Abstand zur Messbandtrommel bzw. zur Zentralachse der Messbandtrommel als auch zum Bandeinzug angeordnet. Das hat den Vorteil, dass der Rotationsdämpfer besser vor Verunreinigungen geschützt ist, die im Bereich des Einzugs in das Bandmaß oder Taschenbandmaß gelangen und durch die Messbandtrommel oder die Messbandwicklung verteilt werden.

Vorzugsweise weist der Rotationsdämpfer ein zweites Getriebeelement, insbesondere Planetenrad, des Getriebes zur drehübertragenden oder rotationsübertragenden Verbindung der Messbandtrommel mit dem Rotationsdämpfer auf.

Durch die Ausbildung des Rotationsdämpfers mit einem Zahnrad können für die Rotationsdämpfer kostengünstige Massenware verwendet werden.

In einer bevorzugten Ausführungsform der Erfindung ist die flanschartige Ausnehmung des Gehäuses oder des Rahmens als erstes Getriebeelement, insbesondere Sonnenrad, mit einer Außenverzahnung ausgebildet, in welche eine komplementäre Verzahnung des zweiten Getriebeelements des Rotationsdämpfers eingreift.

Dadurch kann das Sonnenrad kostengünstig im Spritzguss, 3D-Druck oder einem vergleichbaren Verfahren zusammen mit dem Rahmen oder Gehäuse hergestellt werden.

Vorzugsweise bewirkt der Umlauf des Rotationsdämpfers relativ zu dem Gehäuse oder zu dem Rahmen entlang der kreisförmigen Umlaufbahn um die Zentralachse eine Eigenrotation des Rotationsdämpfers.

Weitere bewegliche Teile, um den Rotationsdämpfer zu rotieren, können damit entfallen. Die Rotation des Rotationsdämpfers wird durch die komplementäre Verzahnung mit dem Sonnenrad bewirkt. Der Rotationsdämpfer rollt quasi durch das zweite Getriebeelement am Sonnenrad entlang ab, während die Flügel bzw. Widerstandselemente in der Dämpfungsstellung innerhalb der Flüssigkeit des Dämpfungsfluidbehälters rotieren können.

In einer optionalen Weiterbildung ist der Rotationsdämpfer auf einem Deckel oder einer Abdeckplatte angeordnet, wobei der Deckel rotationsstarr oder drehstarr mit der Messbandtrommel verbunden ist.

Der Deckel rotiert um die Zentralachse und kann als Deckel oder Abdeckplatte eine äußere Begrenzung des Bandmaßes oder Taschenbandmaßes bereitstellen. Der Rotationsdämpfer ist dann auf einer der Messbandtrommel zugewandten oder abgewandten Wandung der äußeren Begrenzung oder des Deckels angeordnet. Ferner ist der Rotationsdämpfer mit einem, für einen rotationsübertragenden Eingriff mit dem Sonnenrad geeigneten, Abstand zur der Zentralachse auf dem Deckel befestigt. Entsprechend diesem Abstand können auch mehrere Rotationsdämpfer auf dem Deckel für eine parallele oder serielle Dämpfung angeordnet sein.

Vorzugsweise ist zwischen der Messbandtrommel und dem Deckel zu deren Kopplung miteinander ein Messbandtrommel/Deckel-Adapter angeordnet, welcher rotationsstarr oder drehstarr mit dem Deckel und der Messbandtrommel koppelbar oder gekoppelt ist.

Die Messbandtrommel ist ferner drehstarr oder rotationsstarr mit einem Kurbelköper oder einem Federeinzugsmechanismus koppelbar oder verbindbar, sodass auch der Deckel rotationsstarr oder drehstarr mit dem Kurbelkörper oder dem Federeinzugsmechanismus gekoppelt ist.

In einer optionalen Weiterbilddung ist der Messbandtrommel/Deckel-Adapter einstückig mit dem Deckel ausgebildet.

Durch die Integration mehrerer Funktionen in ein Bauteil können Bauteile und damit Montageaufwand gespart werden. Für eine schnelle Montage eines gedämpften Bandmaßes wird zunächst ein Deckel bereitgestellt, der den Adapter für eine Kopplung bereits integriert aufweist. Anschließend wird der Rotationsdämpfer bspw. auf dem Deckel montiert. Schließlich wird der Deckel mit der Messbandtrommel durch Einschieben des Adapters in eine komplementäre Vertiefung der Messbandtrommel gekoppelt. Vorzugsweise ist der Rotationsdämpfer zwischen dem Deckel und der Messbandtrommel angeordnet, sodass er vor Umgebungseinflüssen und Verschmutzung abgeschirmt ist.

Vorzugsweise ist der Messbandtrommel/Deckel-Adapter mit einem oder mehreren Vorsprüngen realisiert, die sich in Richtung der oder zu der Messbandtrommel erstrecken, wobei die Messbandtrommel eine an den oder die Vorsprünge komplementär angepasste Vertiefung, zum reib-, form- und/oder stoffschlüssigen Eingriff aufweist.

Die Kopplung zwischen Deckel und Messbandtrommel ist also realisiert, indem der Vorsprung des Deckels unter Ausbildung eines Formschlusses oder Reibschlusses in eine komplementäre Vertiefung der Messbandtrommel gesteckt wird. Diese Kopplung ist zu Reparatur- oder Wartungszwecken auch wieder demontierbar, was die Langlebigkeit des Bandmaßes oder Taschenbandmaßes verbessert.

In einer bevorzugten Ausführungsform der Erfindung weist der Messbandtrommel/Deckel-Adapter einen Ringvorsprung oder Ringabschnitt auf, wobei sich von einer Stirnseite des Ringvorsprungs oder Ringabschnitts aus ein oder mehrere Vorsprünge in Richtung der oder zu der Messbandtrommel erstrecken, wobei die Messbandtrommel eine Vertiefung aufweist, an den oder die Vorsprünge komplementär zum reib-, form- und/oder stoffschlüssigen Eingriff angepasst ist.

Durch den Ringvorsprung wird zwischen dem Deckel und der Messbandtrommel ein Zwischenraum realisiert, wobei in dem Zwischenraum das Getriebe und/oder der Rotationsdämpfer angeordnet ist. Dadurch können bei der Herstellung des Deckels weitere Funktionen des Bandmaßes oder Taschenbandmaßes in Deckel realisiert werden, was die Teilezahl verringert und die Kosten senkt.

Vorteilhaft ist es ferner, wenn die Lagerung der Messbandtrommel und/oder des Deckels gegenüber dem Gehäuse oder dem Rahmen mit einem Kugellager realisiert ist.

Durch die Verwendung von Kugellagern bewegt sich verglichen mit Gleitlagern das Messband in der Freilaufposition des Rotationsdämpfers besonders gleichmäßig und reibungsarm.

Weitere Einzelheiten, Merkmale, Merkmals(unter)kombinationen, Vorteile und Wirkungen auf der Basis der Erfindung ergeben sich aus der nachfolgenden Beschreibung bevorzugter Ausführungsbeispiele der Erfindung und den Zeichnungen. Diese zeigen in
- Fig. 1a: eine perspektivische Darstellung eines Taschenbandmaßes in einer beispielhaften Ausführungsform der Erfindung, in
- Fig. 1b: eine perspektivische Darstellung eines Taschenbandmaßes in einer ersten beispielhaften Ausführungsform der Erfindung, in
- Fig. 1c: eine perspektivische Darstellung eines Taschenbandmaßes in einer zweiten beispielhaften Ausführungsform der Erfindung, in
- Fig. 2: eine perspektivische Darstellung eines langen Bandmaßes in einer beispielhaften Ausführungsform der Erfindung, in
- Fig. 3: eine perspektivische Darstellung eines langen Bandmaßes in einer beispielhaften Ausführungsform der Erfindung, in
- Fig. 4a-b: zwei perspektivische Darstellungen derselben Messbandtrommel und ihrer Befestigung/Lagerung im Rahmen in einer beispielhaften Ausführungsform der Erfindung, in
- Fig. 5: eine perspektivische Darstellung einer Anordnung aus Deckel und Rotationsdämpfer in einer beispielhaften Ausführungsform der Erfindung, in
- Fig. 6a-b: zwei perspektivische Darstellungen eines Rotationsdämpfers in einer beispielhaften Ausführungsform der Erfindung, in
- Fig. 7: eine Draufsicht eines Getriebes in einer beispielhaften Ausführungsform der Erfindung und in
- Fig. 8: eine perspektivische Darstellung eines Getriebes in einer beispielhaften Ausführungsform der Erfindung.

Die Figuren sind lediglich beispielhafter Natur und dienen nur dem Verständnis der Erfindung. Die gleichen Elemente sind mit denselben Bezugszeichen versehen.

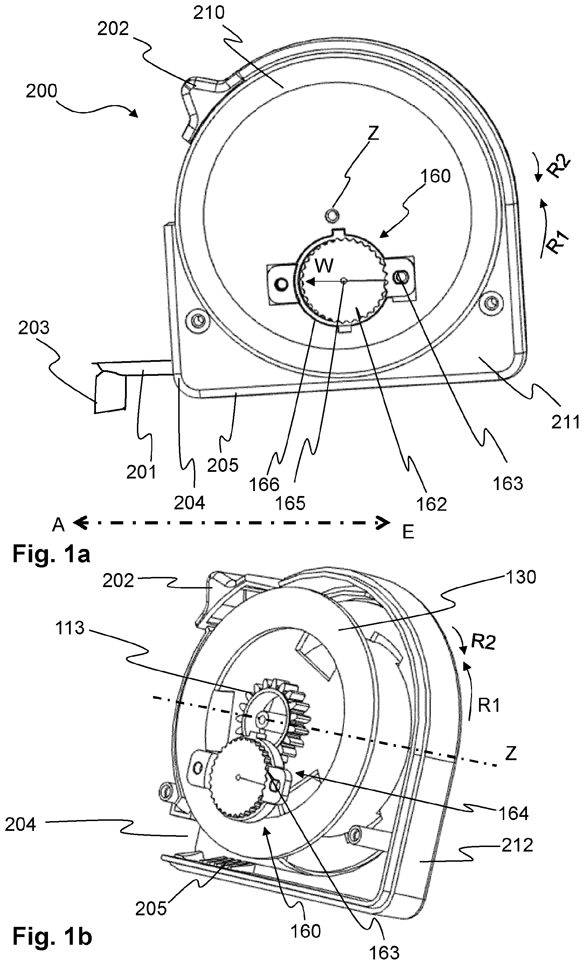

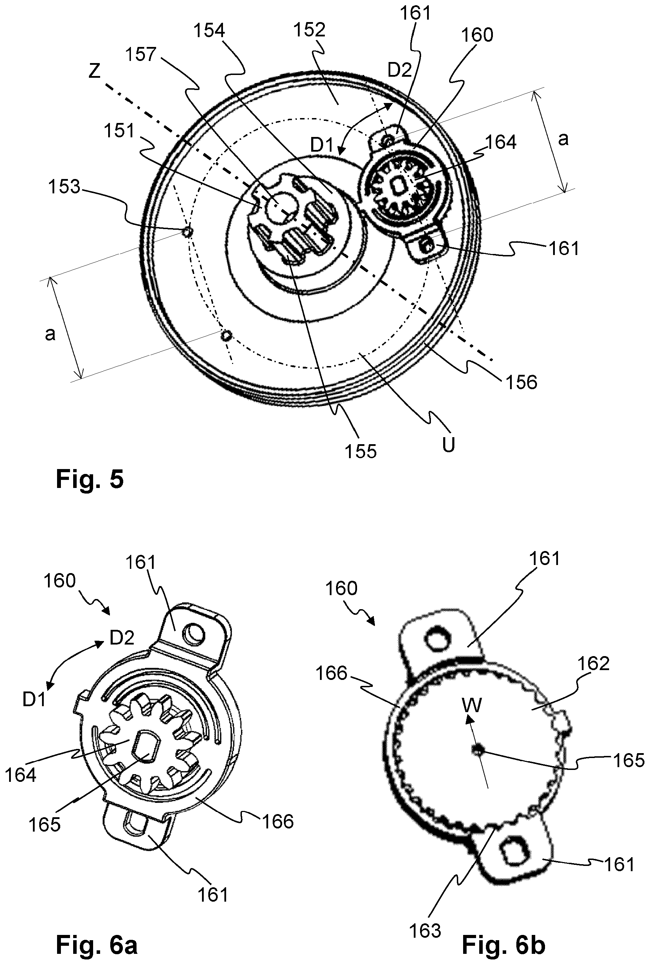

Fig. 1a zeigt ein Taschenbandmaß 200. Das Taschenbandmaß 200 weist ein Gehäuse 210 mit einem ersten Gehäuseelement 211 und einem zweiten Gehäuseelement 212 (verdeckt) auf, in welches eine Messbandwicklung (nicht dargestellt) aufgenommen ist. Aus einem Taschenbandmaßeinzug 204 ist ein Messband 201 durch Rotation einer Messbandtrommel (vgl. Fig. 1b) in einer zweiten Rotationsrichtung R2 um die Zentralachse Z entlang einer Ausziehrichtung A ausziehbar. Am Ende des Messbandes 201 ist ein Metallwinkel 203 zur Anlage an einen ersten Messpunkt für eine Längenmessung angeordnet. Nach Abschluss der Längenmessung kann das Messband 201 durch Betätigung eines Federeinzugsmechanismus (nicht dargestellt) mittels eines Bedienelements 202 durch Rotation der Messbandtrommel 130 (vgl. Fig. 1b) in einer ersten Rotationsrichtung R1 um die Zentralachse Z entlang der Einziehrichtung E wieder in das Gehäuse 210 eingezogen und darin aufgewickelt werden. Das Gehäuse 210 weist eine, vorzugsweise flanschartige Ausnehmung auf, die von einem Rotationsdämpfer 160 zur wenigstens zeitweisen Dämpfung des Messbandes 201 entlang der Einziehrichtung E durchsetzt ist. Im Inneren des Gehäuses 210 ist ein Getriebezahnrad als zweites Getriebeelement 164 (verdeckt vgl. Fig. 6a) angeordnet. Das zweite Getriebeelement 164 treibt eine Rotationsdämpferwelle 165 an, wobei auf der Rotationsdämpferwelle 165 Widerstandselemente zu Rotation in einem Fluidbehälter 166 mit einem Rotationsdämpferfluid angeordnet sind. Die Dämpfungswirkung tritt ein, wenn der Rotationsdämpfer 160 eine Rotation der Rotationsdämpferwelle 165 im Fluidbehälter 166 zulässt. Dies ist durch einen Eingriff zwischen einem Freilaufzahnrad 162 und einer Zahnstange 163 realisiert, was in Fig. 6b noch genauer beschrieben wird. Durch die Anordnung des Rotationsdämpfers 160 mit Abstand von dem Taschenbandmaßeinzug 204 kann eine Beeinträchtigung der Funktionsfähigkeit des Rotationsdämpfers 160 durch Verschmutzungen vermindert werden. Durch die Anordnung des Freilaufzahnrads 164 an der Außenseite des Gehäuses 210 kann das Freilaufzahnrad zusätzlich auch durch den Benutzer, bspw. mit dem Daumen, zwischen einer Dämpfungsstellung und einer Freilaufstellung verschoben werden.

Figur 1b zeigt das Taschenbandmaß 200, wobei ein erstes Gehäuseelement 211 ausgeblendet ist und das erste Getriebeelement 113 des Getriebes 113, 164 freilegt. Das erste Getriebeelement 113 ist als Sonnenrad um die Zentralachse Z rotierend einstückig oder wenigstens rotationsstarr mit der Messbandtrommel 130 ausgebildet. Alternativ kann das erste Getriebeelement 113 auch auf einem separaten Bauteil angeordnet sein, welches rotationsstarr mit der Messbandtrommel 130 gekoppelt ist.

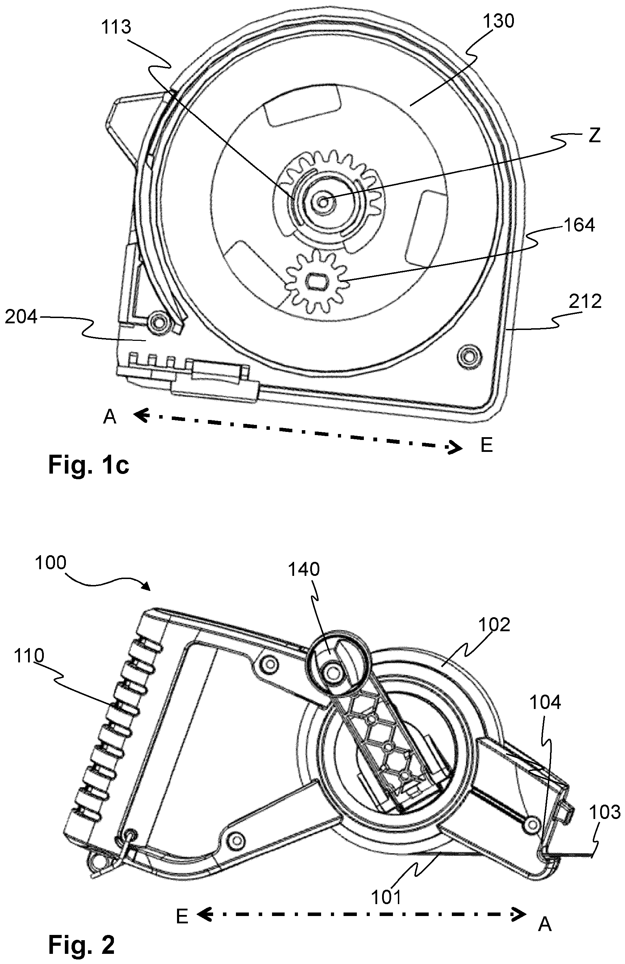

Figur 1c zeigt ein Getriebe 113, 164, bei dem eine zeitweise Dämpfung des Messbandes 201 (vgl. Fig. 1a) beim Einziehen in Einziehrichtung E realisiert ist. Bei dem als erstes Getriebeelement 113 ausgebildeten Stirnzahnrad sind entlang des Umfangs des ersten Getriebeelements 113 Zähne abschnittsweise oder partiell entfernt oder ausgelassen. Sind bspw. 66% der Zähne des ersten Getriebeelements 113 entfernt, findet, während 66% der Umdrehung der Messbandtrommel 130 keine Dämpfung statt, weil zu 66% kein rotationsübertragender Eingriff zwischen dem ersten Getriebeelement 113 und dem zweiten Getriebeelement 164 des Rotationsdämpfers 160 realisiert ist. Das Messband 201 wird partiell pro Umdrehung der Messbandtrommel 130 gedämpft. Ein Messband 201 eines Taschenbandmaßes 200 läuft damit beim Einziehen in Einzugsrichtung E abwechselnd gedämpft und ungedämpft. Eine solch zeitweise Dämpfung ist auch für ein langes Bandmaß 100 realisierbar.

Fig. 2 zeigt ein langes Bandmaß 100. Das lange Bandmaß 100 weist einen Rahmen 110 auf, in welchen eine Messbandwicklung 102 aufgenommen ist. Aus einem Bandmaßeinzug 104 ist ein Messband 101 entlang einer Ausziehrichtung A ausziehbar. Am Ende 103 des Messbandes 101 kann ein Zugring angeordnet werden. Alternativ kann ein Karabiner zum Einhängen eins Lots 120 (vgl. Fig.2) oder sonstigen Spanngewichts vorgesehen sein. Nach Abschluss bspw. der Füllstandmessung in einem Behälter kann das Messband 101 durch Betätigung einer Kurbeleinrichtung 140 entlang der Einziehrichtung E wieder durch den Einzug 104 in den Rahmen 110 eingezogen und darin aufgewickelt werden. Ein Rotationsdämpfer 160 (vgl. Fig. 6a) ist zur wenigstens zeitweisen Dämpfung des Messbandes 101 entlang der Auszugsrichtung A vorgesehen.

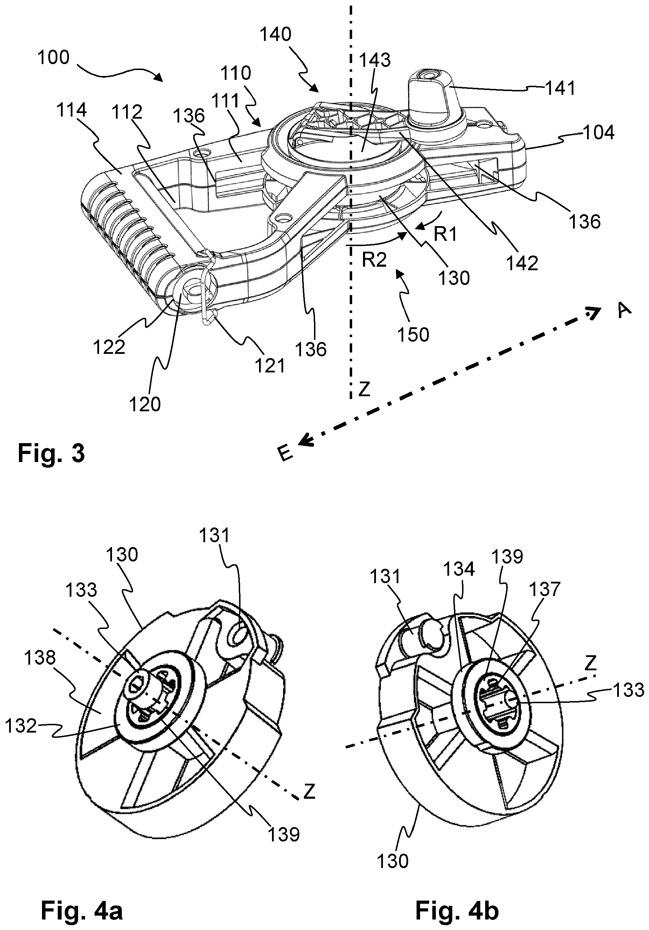

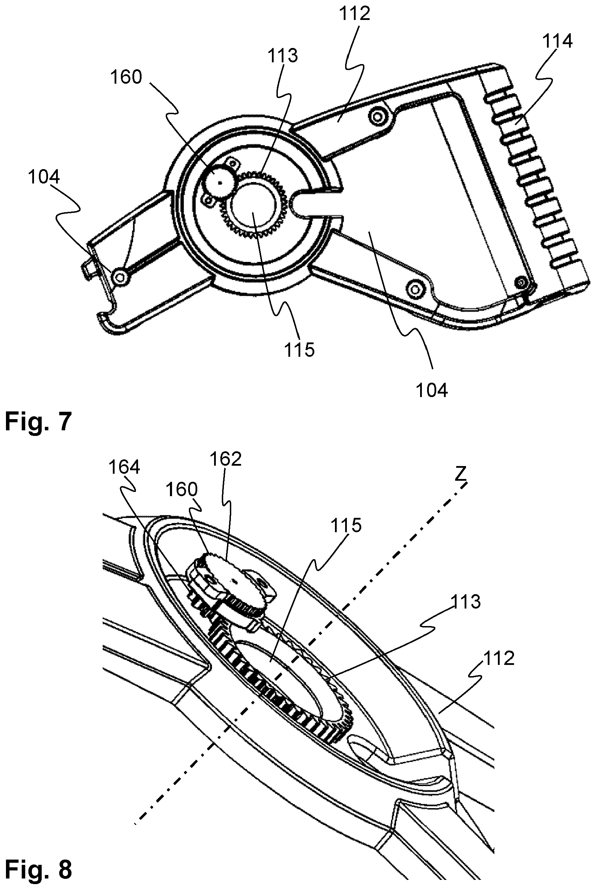

Gemäß Fig.3 ist der Rahmen 110 des langen Bandmaßes 100 aus zwei Rahmenelementen, nämlich einem ersten Rahmenelement 111 und einen zweiten Rahmenelement 112 aufgebaut. Beide Rahmenelemente 111, 112 bilden gemeinsam einen Handgriff 114 aus. In dem Handgriff 114 ist eine längliche Vertiefung vorgesehen, welche eine Parkposition 122 für ein Lot 120 ausbildet. Das Lot 120 ist durch einen Lotbügel 121 bei Nichtgebrauch in der Parkposition 122 gehalten. Aus einem Bandmaßeinzug 104 ist ein Messband 101 (vgl. Fig.2) durch Rotation einer Messbandtrommel 130 in einer zweiten Rotationsrichtung R2 um die Zentralachse Z entlang einer Ausziehrichtung A ausziehbar. Durch Betätigung einer Kurbeleinrichtung 140 und durch Rotation der Messbandtrommel 130 in einer ersten Rotationsrichtung R1 um die Zentralachse Z entlang der Einziehrichtung E wird das Messband 101 (vgl. Fig.2) wieder in den Rahmen 110 eingezogen und darin aufgewickelt. Die Messbandtrommel 130 ist hierfür innerhalb oder relativ zu einer, insbesondere einstückig angefügten, flanschartigen Ausnehmung 115 (vgl. Fig. 7) des Rahmens 110 rotierbar gelagert. Beide Rahmenelemente 111, 112 weisen die Ausnehmung 115 auf. Die Kurbeleinrichtung 140 weist einen Kurbelgriff 141, einen Kurbelarm 142 und einen Kurbelkörper 143 auf. Der Kurbelkörper 143 weist auf der dem Kurbelarm 142 abgewandten Seite Vorsprünge (nicht dargestellt) auf, die in komplementäre Vertiefungen 138 (vgl. Fig. 4a) der Messbandtrommel 130 eingreifen können, sodass, rotationsstarr miteinander verbunden, durch Rotation des Kurbelkörpers 143 auch die Messbandtrommel 130 rotiert. An einer radial nach außen gerichteten Oberfläche der Messbandtrommel 130 ist in einem Messbandaufnahmebereich eine Messbandwicklung 102 (vgl. Fig.2) anordenbar, wobei der Messbandaufnahmebereich von Begrenzungswandungen 136 am Rahmen 110 begrenzt ist. In einer nicht dargestellten Variante kann das Messband 101 (vgl. Fig. 2) des langen Bandmaßes 100 auch zwischen Messbandtrommel 130 und Handgriff 114 angeordnet sein und ein Ausziehen in Richtung Untergrund erleichtern.

Fig.4a zeigt eine der Kurbeleinrichtung 140 (vgl. Fig. 2) zugewandte Seite der Messbandtrommel 130. Fig.4b zeigt eine dem Deckel 150 (vgl. Fig. 5) zugewandte Seite der Messbandtrommel 130. Die Messbandtrommel 130 rotiert um die Zentralachse Z. Dafür weist die Messbandtrommel 130 zwei sich entlang der Zentralachse Z erstreckende axiale Lagervorsprünge 139 auf, wobei die Lagervorsprünge 139 jeweils gegen einen inneren Lagerring eines Kugellagers 132, 134 gelagert sind. Der äußere Lagerring des ersten Kugellagers 132 ist gegen das erste Rahmenelement 111 (vgl. Figur 2) gelagert, während der zweite Lagerring 134 gegen das zweite Rahmenelement 112 (vgl. Figur 2) gelagert ist. Die Messbandtrommel 130 ist von einer Montageschraube 133 durchsetzt, wobei der Schraubenkopf der Befestigungsschraube 133 auf der der Kurbeleinrichtung 140 zugewandten Seite der Messbandtrommel 130 angeordnet ist und der Schraubenschaft der Befestigungsschraube 133 in eine Zentralachsenbohrung 157 (vgl. Fig. 5) des Deckels 150 einschraubbar ist. Die Messbandtrommel 130 weist ferner eine Einhängevertiefung 131 zum Einhängen des Messbands 101 (vgl. Fig. 2) auf. Ferner ist die Messbandtrommel 130 von einer Vertiefung 137 durchsetzt, in welche komplementäre Vorsprünge 155 des Deckels 150 einschiebbar sind, um eine rotationsstarre Verbindung, d.h. eine eine Rotation übertragende Verbindung, zwischen Messbandtrommel 130 und Deckel 150 auszubilden.

Fig. 5 zeigt einen Deckel 150, der eine kreisförmige Deckelwandung 152 zur Montage des Rotationsdämpfers 160 aufweist. Der Deckel 150 bildet eine seitliche Begrenzung oder Abdeckung eines langen Bandmaßes 100 (vgl. Fig.2), wobei an der der Messbandtrommel 130 zugewandten Seite des Deckels 150 ein oder mehrere Rotationsdämpfer 160 montiert werden können. Hierfür sind in der Deckelwandung 152 Montagebohrungen 153 zur Montage eines Rotationsdämpfers 160 vorgesehen, wobei der Abstand a der Montagebohrungen 153 dem Abstand a von Bohrungen in Befestigungslaschen 161 des Rotationsdämpfers 160 entspricht. Die dargestellte Ausführung zeigt einen Rotationsdämpfer 160, jedoch sind zwei weitere Montagebohrungen 153 vorgesehen, sodass ein zweiter Rotationsdämpfer 160 montiert werden könnte. Damit können zwei (oder mehr, hier bis zu vier) Rotationsdämpfer 160 das Messband 101 (vgl. Figur 2) parallel dämpfen. Die Montagebohrungen 153 sind auf einem Umkreis angeordnet, dessen Mittelpunkt die Zentralachse Z bildet. Der Umkreis bildet damit quasi eine Umlaufbahn U aus, entlang der der Rotationsdämpfer 160 und damit das zweite Getriebeelement 164 als Planetenrad um die Zentralachse Z umlaufen kann. Die Rotationsbewegung des Deckels 150 ist realisiert, indem der Deckel 150 rotationsstarr mit der Messbandtrommel 130 verbunden ist. Hierfür ist ein Messbandtrommel/Deckel-Adapter 151 vorgesehen, der einstückig mit dem Deckel 150 ausgebildet ist. Der Adapter 151 weist zur Kopplung mit der Messbandtrommel 130 einen Ringvorsprung oder Ringabschnitt 154 und einen Vorsprung 155, wobei der Vorsprung 155 in eine komplementäre Vertiefung 137 (vgl. Fig. 4b) der Messbandtrommel 130 für eine rotationsstarre Verbindung einsteckbar oder einschiebbar ist. Der Ringabschnitt 154 schafft einen Zwischenraum zwischen der Deckelwandung 152 und dem Rahmen 110, indem ein Getriebe, aufweisen ein erstes Getriebeelement 113 (vgl. Fig. 7) und ein zweites Getriebeelement 164 (vgl. Fig. 6a) anordenbar ist. Über die Zentralachsenbohrung 157 ist der Deckel 150 ferner über die Befestigungsschraube 133 (vgl. Fig. 4b) mit der Messbandtrommel 130 verschraubt. Eine Umrandung 156 schirmt den Rotationsdämpfer 160 bzw. das Getriebe gegen die Umgebung ab, so dass Verunreinigungen die Funktionsfähigkeit des Getriebes nicht beeinträchtigen können.

Fig.6a zeigt eine der Messbandtrommel 130 (vgl. Fig. 2) zugewandte Seite des Rotationsdämpfers 160. Fig.6b zeigt eine dem Deckel 150 (vgl. Fig. 5) zugewandte Seite des Rotationsdämpfers 160. Der Rotationsdämpfer 160 weist einen Fluidbehälter 166 auf, der mit einem zähflüssigen Dämpfungsfluid, insbesondere mit einer Silikonflüssigkeit, gefüllt ist. Innerhalb des Dämpfungsfluids des Fluidbehälters 166 rotieren Flügel oder sonstige Widerstandselemente zur Ausbildung eines Strömungswiderstands. Diese Dämpfungswirkung oder Bremswirkung überträgt sich über ein rotationsstarr auf der Rotationsdämpferwelle 165 angeordnetes zweites Getriebeelement 164, welches als Planetenzahnrad eines Getriebes ausgebildet ist und, montiert auf dem Deckel 150, um ein starres Sonnenrad 113 (vgl. Fig. 7, 8) umläuft. Fig. 6b zeigt den Rotationsdämpfer 160 in einer Dämpfungsposition. Die Dämpfungswirkung tritt ein, wenn der Rotationsdämpfer 160 eine Rotation der Rotationsdämpferwelle 165 im Fluidbehälter 166 zulässt. Dies ist durch einen Eingriff zwischen einem Freilaufzahnrad 162 und einer Zahnstange 163 realisiert. Infolge der Bewegung des Messbandes 101, 201 (vgl. Fig. 1, 2) bewegt sich die Rotationsdämpferwelle 165 entlang der Wechselrichtung W (Pfeilrichtung) in eine Freilaufstellung, in der das Freilaufzahnrad 162 nicht mehr von der Zahnstange 163 in Eingriff gehalten und fixiert ist. Nach Bewegung des Freilaufzahnrads 162 in Wechselrichtung W bildet sich durch das Dämpfungsfluid ein Reibschluss zwischen Behälter 166 und Rotationsdämpferwelle 165 aus, sodass Behälter 166 und Rotationsdämpferwelle 165 gemeinsam rotieren und keine Dämpfungswirkung stattfindet. In Eingriff des Freilaufzahnrads 162 mit der Zahnstange 163 hingegen ist dieser Reibschluss überwunden, sodass die Rotationsdämpferwelle 165 in dem Fluidbehälter 166 dämpfend rotiert. Grundsätzlich kann der Rotationsdämpfer 160 eine Dämpfungswirkung in einer ersten Rotationsdämpferrichtung D1 und einer zweiten Rotationsdämpferrichtung D2 realisieren. Ob tatsächlich die Dämpfungswirkung eintritt hängt davon ab, ob der Eingriff zwischen Freilaufzahnrad 162 und Zahnstange 163 realisiert ist.

Fig.7 und Fig. 8 betreffen die Anordnung des Rotationsdämpfers 160 an oder in einem zweiten Rahmenelement 112 des Rahmens 110. Das zweite Rahmenelement 112 weist eine einstückig angefügte flanschartige Ausnehmung 115 auf, in der die Messbandtrommel 130 über ein Kugellager 134 (vgl. Fig. 4) rotierbar lagerbar ist. Die flanschartige Ausnehmung 115 bildet gleichzeitig ein erstes Getriebeelement 113, insbesondere Sonnenrad, des Getriebes 113, 164 zur drehübertragenden Verbindung der Messbandtrommel 130 mit dem Rotationsdämpfer 160 aus. Die flanschartige Ausnehmung 115 des Rahmens 110 weist als erstes Getriebeelement, insbesondere Sonnenrad, ein Stirnzahnrad auf, welches mit einer Außenverzahnung der Ausnehmung 115 realisiert ist. Eine solche Ausnehmung 115 kann auch alternativ oder zusätzlich am ersten Rahmenelement 111 (vgl. Fig. 3) realisiert sein, sodass das Bandmaß 100 je nach Verwendung für Rechtshänder oder Linkshänder umbaubar ist. In diese Außenverzahnung kann eine komplementäre Verzahnung des zweiten Getriebeelements 164 des Rotationsdämpfers 160 eingreifen. Das erste Getriebeelement 113 und das zweite Getriebeelement 164 sind damit als Stirnzahnrad ausgebildet. Das Getriebe 113, 164 ist damit in der Art eines Planetengetriebes ausgebildet, wobei der Rotationsdämpfer 160 als Planet rotationsstarr mit der Messbandtrommel 130 gekoppelt ist und beim Aufwickeln und/oder Abwickeln des Messbands 101 (vgl. Fig.2) relativ zu dem Rahmen 110 die Zentralachse Z umlaufend ausgebildet ist, wobei während des Umlaufens das Planetenrad 164 am Sonnenrad 113 abrollt. Der Umlauf des Rotationsdämpfers 160 relativ zu dem zweiten Rahmenelement 112 um die Zentralachse Z bewirkt eine Eigenrotation des Rotationsdämpfers 160. Für eine korrekte Montage am Deckel 150 besteht ein dauerhafter Eingriff zwischen dem Planetenrad 164 und dem Sonnenrad 113 während des gesamten Umlaufs entlang der Umlaufbahn U (vgl. Fig. 5).

### Bezugszeichenliste

- 100: Bandmaß, insbesondere langes Bandmaß
- 101: Messband
- 102: Messbandwicklung
- 103: Ende
- 104: Bandmaßeinzug
- 110: Rahmen
- 111: erstes Rahmenelement
- 112: zweites Rahmenelement
- 113: erstes Getriebeelement, insbesondere Sonnenrad oder Sonnenzahnrad
- 114: Handgriff
- 115: Ausnehmung
- 120: Lot
- 121: Lotbügel
- 123: Lot-Parkposition
- 130: Messbandtrommel
- 131: Einhängevertiefung
- 132: erster Lagerring
- 133: Wellenschraube
- 135: zweiter Lagerring
- 136: Begrenzungswandung Messbandwicklung
- 137: Vertiefung für Deckel
- 138: Vertiefung für Kurbelkörper
- 139: Lagervorsprung
- 140: Kurbeleinrichtung
- 141: Kurbelgriff
- 142: Kurbelarm
- 143: Kurbelkörper
- 150: Deckel
- 151: Messbandtrommel/Deckel-Adapter
- 152: Deckelwandung
- 153: Montagebohrung
- 154: Ringvorsprung oder Ringabschnitt
- 155: Vorsprung
- 156: Umrandung
- 157: Zentralachsenbohrung
- 160: Mittel zur Rotationsdämpfung, insbesondere Rotationsdämpfer
- 161: Befestigungslaschen
- 162: Freilaufzahnrad
- 163: Zahnstange
- 164: zweites Getriebeelement, insbesondere Planetenrad oder Planetenzahnrad
- 165: Rotationsdämpferwelle
- 166: Behälter, insbesondere Fluidbehälter
- 200: Taschenbandmaß
- 201: Messband
- 202: Bedienelement
- 203: Metallwinkel
- 204: Taschenbandmaßeinzug
- 205: Dämpfungselement
- 210: Gehäuse
- 211: erstes Gehäuseelement
- 212: zweites Gehäuseelement
- a: Abstand
- A: Ausziehrichtung
- D1: erste Rotationsrichtung des Rotationsdämpfers
- D2: zweite Rotationsrichtung des Rotationsdämpfers
- E: Einziehrichtung
- R1: erste Rotationsrichtung
- R2: zweite Rotationsrichtung
- U: Umlaufbahn
- W: Wechselrichtung
- Z: Zentralachse

## Patentansprüche

1. Bandmaß (100) oder Taschenbandmaß (200), aufweisend
- ein Gehäuse (210) oder einen Rahmen (110),
- ein im Innern des Gehäuses (210) oder innerhalb des Rahmens (110) angeordnetes oder anordenbares Messband (101, 201),
- eine gegenüber dem Gehäuse (210) oder dem Rahmen (110) rotierbar gelagerte Messbandtrommel (130), die zum Aufwickeln des Messbandes (101, 201) entlang dessen Einziehrichtung (E) in einer ersten Rotationsrichtung (R1) und zum Abwickeln des Messbandes (101, 201) entlang dessen Ausziehrichtung (A) in einer zweiten Rotationsrichtung (R2) um eine Zentralachse (Z) rotierbar ist,
**dadurch gekennzeichnet, dass**
das Messband (101, 201) und/oder die Messbandtrommel (130) mit einem Mittel zur Rotationsdämpfung (160) gekoppelt ist, wobei das Messband (101, 201) und/oder die Messbandtrommel (130) in einer ersten Richtung (E oder A) des Messbands (101, 201) und/oder einer ersten Richtung (R1 oder R2) der Messbandtrommel (130) wenigstens zeitweise freiläuft und in einer, der ersten Richtung jeweils entgegengesetzten, zweiten Richtung (A bzw. E) des Messbands (101, 201) und/oder zweiten Richtung (R1 bzw. R2) der Messbandtrommel (130), wenigstens zeitweise durch das Mittel zur Rotationsdämpfung (160) gedämpft ist.

2. Bandmaß (100) oder Taschenbandmaß (200) nach Anspruch 1,
**dadurch gekennzeichnet, dass**
das Mittel zur Rotationsdämpfung ein Rotationsdämpfer (160) ist und die Messbandtrommel (130) mit dem Rotationsdämpfer (160) eine Rotation übertragend verbunden ist, wobei der Rotationsdämpfer (160) in einer ersten Rotationsrichtung (D1) des Rotationsdämpfers (160) freiläuft und in einer zweiten, der ersten Rotationsrichtung (D1) entgegengesetzten Rotationsrichtung (D2) des Rotationsdämpfers (160), wenigstens zeitweise gedämpft läuft.

3. Bandmaß (100) oder Taschenbandmaß (200) nach einem der Ansprüche 1 oder 2,
**dadurch gekennzeichnet, dass**
das Messband (101) des Bandmaßes (100) oder das Messband (201) des Taschenbandmaßes (200) mittels des Mittels zur Rotationsdämpfung, insbesondere des Rotationsdämpfers (160) wahl- und/oder bedarfsweise entweder beim Abwickeln in der Ausziehrichtung (A) gedämpft wird und beim Aufwickeln in der Einziehrichtung (E) freiläuft oder beim Aufwickeln in der Einziehrichtung (E) gedämpft wird und beim Abwickeln in der Ausziehrichtung (A) freiläuft.

4. Bandmaß (100) oder Taschenbandmaß (200) nach einem der vorhergehenden Ansprüche,
**dadurch gekennzeichnet, dass**
das Mittel zur Rotationsdämpfung, insbesondere der Rotationsdämpfer (160) einen Behälter (166) aufweist, der mit einem zähflüssigen Dämpfungsfluid, insbesondere mit einer Silikonflüssigkeit, gefüllt ist, wobei innerhalb des Dämpfungsfluids einer oder mehrere Flügel oder sonstige Widerstandselemente zur Ausbildung eines Strömungswiderstands rotieren.

5. Bandmaß (100) oder Taschenbandmaß (200) nach einem der vorhergehenden Ansprüche,
**dadurch gekennzeichnet, dass**
das Mittel zur Rotationsdämpfung, insbesondere der Rotationsdämpfer (160) aus einer Freilaufstellung in eine Dämpfungsstellung überführbar ist, wobei der Wechsel von der Freilaufstellung in die Dämpfungsstellung durch die Bewegung des Messbandes (101, 201) entweder entlang der Ausziehrichtung (A) oder entlang der Einziehrichtung (E) bewirkt ist.

6. Bandmaß (100) oder Taschenbandmaß (200) nach einem der vorhergehenden Ansprüche,
**dadurch gekennzeichnet, dass**
ein Getriebe (113, 164) in der Art eines Planetengetriebes mit einem der Zentralachse (Z) zugeordneten ersten Getriebeelement (113) und einem dem Rotationsdämpfer (160) zugeordneten zweiten Getriebeelement (164) ausgebildet ist, wobei das Mittel zur Rotationsdämpfung, insbesondere der Rotationsdämpfer (160) über das Getriebe (113, 164) eine Rotation übertragend mit der Messbandtrommel (130) gekoppelt ist.

7. Bandmaß (100) oder Taschenbandmaß (200) nach Anspruch 6,
**dadurch gekennzeichnet, dass**
das erste Getriebeelement (113) des Getriebes (113, 164) beim Aufwickeln und/oder Abwickeln des Messbands (101, 201) relativ zu dem Gehäuse (210) oder zu dem Rahmen (110), um die Zentralachse (Z) rotierend ausgebildet ist, wobei das zweite Getriebeelement (164) ortsfest, um eine eigene Achse rotierend, an dem Gehäuse (210) und/oder an dem Rahmen (110) montiert ist.

8. Bandmaß (100) oder Taschenbandmaß (200) nach Anspruch 6,
**dadurch gekennzeichnet, dass**
das als ein Planetenrad ausgebildete zweite Getriebeelement (164), beim Aufwickeln und/oder Abwickeln des Messbands (101, 201) relativ zu dem Gehäuse (210) oder zu dem Rahmen (110), die Zentralachse (Z) umlaufend, ausgebildet ist, wobei das erste Getriebeelement (113) fest mit dem Gehäuse (210) und/oder mit dem Rahmen (110) verbunden ist.

9. Bandmaß (100) oder Taschenbandmaß (200) nach Anspruch 8,
**dadurch gekennzeichnet, dass**
die Messbandtrommel (130) innerhalb oder relativ zu einer, insbesondere einstückig angefügten, flanschartigen Ausnehmung (115) des Gehäuses (210) oder des Rahmens (110) rotierbar gelagert ist, wobei die flanschartige Ausnehmung (115) durch das erste Getriebeelement (113), insbesondere ein Sonnenrad, des Getriebes (113, 164) begrenzt ist.

10. Bandmaß (100) oder Taschenbandmaß (200) nach Anspruch 9,
**dadurch gekennzeichnet, dass**
die flanschartige Ausnehmung (115) des Gehäuses (210) oder des Rahmens (110) durch das erste Getriebeelement (113), insbesondere Sonnenrad, mit einer Außenverzahnung begrenzt ist, in welche eine komplementäre Verzahnung des zweiten Getriebeelements (164) des Mittels zur Rotationsdämpfung, insbesondere des Rotationsdämpfers (160) eingreift.

11. Bandmaß (100) oder Taschenbandmaß (200) nach einem der Ansprüche 8-10,
**dadurch gekennzeichnet, dass**
der Umlauf des Mittels zur Rotationsdämpfung, insbesondere des Rotationsdämpfers (160) relativ zu dem Gehäuse (210) oder zu dem Rahmen (110) um die Zentralachse (Z) eine Eigenrotation des Mittels zur Rotationsdämpfung, insbesondere des Rotationsdämpfers (160) bewirkt.

12. Bandmaß (100) oder Taschenbandmaß (200) nach einem der vorhergehenden Ansprüche,
**dadurch gekennzeichnet, dass**
das Mittel zur Rotationsdämpfung, insbesondere der Rotationsdämpfer (160) auf einem Deckel (150) oder einer Abdeckplatte des Bandmaßes (100) oder Taschenbandmaßes (200) angeordnet ist, wobei der Deckel (150) oder die Abdeckplatte rotationsstarr mit der Messbandtrommel (130) verbunden ist.

13. Bandmaß (100) oder Taschenbandmaß (200) nach einem der Ansprüche1 bis 11,
**dadurch gekennzeichnet, dass**
das erste Getriebeelement (113), insbesondere Sonnenrad, an einem Deckel (150) oder einer Abdeckplatte des Bandmaßes (100) oder Taschenbandmaßes (200), insbesondere einstückig angeordnet ist, wobei der Deckel (150) oder die Abdeckplatte rotationsstarr mit der Messbandtrommel (130) verbunden ist.

14. Bandmaß (100) oder Taschenbandmaß (200) nach einem der Ansprüche 12 oder 13,
**dadurch gekennzeichnet, dass**
zwischen der Messbandtrommel (130) und dem Deckel (150) zu deren rotationstarrer Verbindung miteinander ein Messbandtrommel/Deckel-Adapter (151) angeordnet ist, welcher rotationsstarr mit dem Deckel (150) und der Messbandtrommel (130) koppelbar oder gekoppelt ist.

15. Bandmaß (100) oder Taschenbandmaß (200) nach Anspruch 13,
**dadurch gekennzeichnet, dass**
der Messbandtrommel/Deckel-Adapter (151) einstückig mit dem Deckel (150) ausgebildet ist und das erste Getriebeelement (113), insbesondere Sonnenrad, entlang eines äußeren Umfangs des Messbandtrommel/Deckel-Adapters (151) ausgebildet ist.
